# EUROPÄISCHE PATENTANMELDUNG

(11) **EP 1 179 686 A2**
(43) Veröffentlichungstag der Anmeldung: **13.02.2002**
(21) Anmeldenummer: 01119141.8
(22) Anmeldetag: 08.08.2001
(51) Int. Cl.: F16D 65/20

(54) **Bremszylindergehäuse für eine Scheibenbremse**

(30) Priorität: 09.08.2000 DE 10038892
(71) Anmelder: GUSTAV MAGENWIRTH GmbH & Co., D-72574 Bad Urach (DE)
(72) Erfinder: Hujer, Joachim, 73342 Bad Ditzenbach (DE)
(74) Vertreter: Friese, Martin

(57) **Zusammenfassung**

Die vorliegende Erfindung betrifft ein Bremszylindergehäuse (100) für eine Scheibenbremse mit mindestens einer Bohrung (101) zur Aufnahme eines Bremskolbens (10), die ein bremsscheibenseitiges offenes Ende (102) und ein bremsscheibenfernes geschlossenes Ende (103) aufweist, mit einer in der Bohrung (101) ausgebildeten Nut (140) zur Aufnahme einer zwischen Bremskolben und Bohrung wirkenden Dichtung, einem zwischen der Nut und dem offenen Ende (102) liegenden ersten Abschnitt (110) der Bohrung zur Führung des Bremskolbens in der Bohrung, und einem sich an die Nut anschließenden zweiten Abschnitt (120) der Bohrung, der zwischen der Nut und dem geschlossenen Ende (103) liegt und ein nutseitiges Ende (122) und ein nutfernes Ende (121) aufweist, wobei der zweite Abschnitt (120) am nutseitigen Ende (122) einen Durchmesser hat, der größer als der Durchmesser des ersten Abschnitts (110) ist.
Der Erfindung liegt die Aufgabe zugrunde, ein Bremszylindergehäuse anzugeben, das bei einem relativ kurzbauenden Bremskolben eine gute Führung des Bremskolbens in der Bohrung ohne die Gefahr eines Verklemmens gewährleistet.
Zur Lösung der Aufgabe nimmt der Durchmesser des zweiten Abschnitts (120) vom nutseitigen Ende (122) zum nutfernen Ende (121) hin ab.

## Beschreibung

Die vorliegende Erfindung betrifft ein Bremszylindergehäuse für eine Scheibenbremse gemäß dem Oberbegriff von Anspruch 1 bzw. eine Scheibenbremse mit einem oder mehreren derartigen Bremszylindergehäusen. Insbesondere betrifft die Erfindung ein Bremszylindergehäuse für eine Fahrradscheibenbremse.

In dem Bremszylindergehäuse wird der Bremskolben in der Regel in einem ersten Abschnitt geführt, der möglichst in der Nähe der die Dichtung aufnehmenden Nut angeordnet ist, um eine möglichst gleichmäßige Dichtungswirkung zu erreichen. Dazu hat dieser Abschnitt einen Durchmesser, der geringfügig größer als der Außendurchmesser des Bremskolbens ist. Zusätzlich wird der Bremskolben in der Regel in einem hinteren Abschnitt der Bohrung, d.h. einem Abschnitt in Richtung des geschlossenen Endes der Bohrung, geführt, um ein Verkippen des Bremskolbens zu vermeiden. Dieser Abschnitt hat in der Regel einen Durchmesser, der dem Durchmesser des ersten Abschnitts entspricht.

Bei bekannten Bremszylindergehäusen entsteht ein Problem, wenn ein sehr kurzbauender Bremskolben verwendet wird. Sobald der Bremsbelag derart stark abnutzt, daß das Ende des Bremskolbens in den Bereich der zwischen Bremskolben und Bohrung wirkenden Dichtung gelangt, besteht die Gefahr, daß das Ende des Bremskolbens hinter die Kante der die Dichtung aufnehmenden Nut gelangt und somit eventuell verhindert, daß der Bremskolben zurück in die Bohrung geschoben werden kann. Dieses Problem kann insbesondere beim Wechsel der Bremsbeläge auftreten.

Dem Fachmann sind verschiedene Nutformen bekannt, die eine nicht senkrechte Abschlußwandung in Richtung des geschlossenen Endes der Bohrung aufweisen.

Die DE 23 26 047 A1 zeigt in den Figuren 2 bis 7 verschiedene Ausgestaltungen einer Nut. Zwischen der von der Bremsscheibe abgewandten bzw. bremscheibenfernen Wandung der Nut und der Dichtung ist ein Raum vorgesehen, damit sich die Dichtung mit dem Bremskolben in Richtung des geschlossenen Endes mitbewegen kann. Dadurch soll ein unerwünschtes Verschieben des Bremskolbens gegenüber der Dichtung vermieden werden.

Die EP 0 088 689 A1 offenbart eine Nut, die einen Aufnahmeraum für die Dichtung und neben der Dichtung in Richtung des geschlossenen Endes der Bohrung einen Druckraum vorsieht, um die Verformung der Dichtung beim Bremsen zu unterstützen.

Die Wandungen der Nut in dem angegebenen Stand der Technik sind immer relativ steil, d.h. sie weisen einen Winkel gegenüber der Längsachse der Bohrung von mindestens 45 Grad auf. Daher können diese Wandungen das Verklemmen des Bremskolbens in der Nut nicht verhindern.

Aus der DE 32 45 157 A1 ist ein Bremszylindergehäuse gemäß dem Oberbegriff von Anspruch 1 bekannt. Bei dem in der Fig. 9 der DE 32 45 157 A1 gezeigten Bremszylindergehäuse weist die den Bremskolben aufnehmende Bohrung zwischen der Nut und dem geschlossenen Ende einen zylinderischen Abschnitt auf, dessen Durchmesser größer als der Durchmesser des Abschnitts ist, der sich an die Nut in Richtung des offenen Endes des Bohrung unmittelbar anschließt. Einen entsprechenden Aufbau eines Bremszylindergehäuses zeigt die Patentschrift US 5 964 321. Beiden Ausführungen ist gemeinsam, daß der Bremskolben in der Bohrung leicht verkippen kann, wenn der Bremsbelag aufgrund der beim Bremsen entstehenden Kräfte ungleichmäßig abnutzt. Nutzt der Belag soweit ab, daß das Bremskolbenende beim Bremsen in den Bereich der Nut gelangt, kann sich bei diesen Ausführungen der Bremskolben nicht hinter dem geschlossenen Ende der Bohrung zugewandten Rand verklemmen bzw. verhaken, weil die Bohrung im Anschluß an die Nut hinreichend aufgeweitet ist. Weil die Bohrung hinter der Nut jeweils aufgeweitet ist, haben diese Ausführungen jedoch den Nachteil, daß die Führung des Bremskolbens insbesondere bei einem neuen Bremsbelag nicht optimal ist.

Der Erfindung liegt daher die Aufgabe zugrunde, ein Bremszylindergehäuse anzugeben, das bei einem relativ kurzbauenden Bremskolben eine gute Führung des Bremskolbens in der Bohrung ohne die Gefahr eines Verklemmens in der Nut bei abgenutztem Bremsbelag gewährleistet.

Die Aufgabe wird einem Bremsylindergehäuse gemäß den Merkmalen von Anspruch 1 gelöst. Vorteilhafte Ausgestaltungen der Erfindung sind in den abhängigen Ansprüchen angegeben.

Gemäß den Merkmalen von Anspruch 1 umfaßt das Bremszylindergehäuse für eine Scheibenbremse mindestens eine Bohrung zur Aufnahme eines Bremskolbens, die ein bremsscheibenseitiges offenes Ende und ein bremsscheibenfernes geschlossenes Ende aufweist, eine in der Bohrung ausgebildete Nut zur Aufnahme einer zwischen Bremskolben und Bohrung wirkenden Dichtung, einen zwischen der Nut und dem offenen Ende liegenden ersten Abschnitt der Bohrung zur Führung des Bremskolbens in der Bohrung, und einen sich an die Nut anschließenden zweiten Abschnitt der Bohrung, der zwischen der Nut und dem geschlossenen Ende liegt und ein nutseitiges Ende und ein nutfernes Ende aufweist, wobei der zweite Abschnitt am nutseitigen Ende einen Durchmesser hat, der größer als der Durchmesser des ersten Abschnitts ist, wobei der Durchmesser des zweiten Abschnitts vom nutseitigen Ende zum nutfernen Ende hin abnimmt.

Durch den in Richtung des geschlossenen Endes verminderten Durchmesser der Bohrung im Bereich des zweiten Abschnitts verbessert sich die Führung des Bremskolbens insbesondere bei einem relativ neuen, nicht stark abgenutzten Bremsbelag, ohne die Einführung des Bremskolbens in den hinter der Nut gelegenen Abschnitt der Bohrung zu beeinträchtigen.

Bei dem erfindungsgemäßen Bremszylindergehäuse ist vorzugsweise der Durchmesser des zweiten Abschnitts am nutseitigen Ende hinreichend groß, um einen im ersten Abschnitt geführten und infolge der Bremsbelagabnutzung gegenüber der Bohrung verkippten Bremskolben aufzunehmen. Eine derartige Aufweitung des zweiten Abschnitts hat den Vorteil, daß sich der Bremskolben nach dem Lösen der Bremse nicht hinter der Nut verklemmt und das Lüftungsspiel sicher eingestellt wird.

Weiterhin entspricht vorzugsweise der Durchmesser des zweiten Abschnitts am nutfernen Ende im wesentlichen dem Durchmesser des ersten Abschnitts. Dadurch läßt sich eine gute Führung des Bremskolbens erreichen.

Vorteilhafterweise ist der Durchmesser der Bohrung am nutseitigen Ende des zweiten Abschnitts etwa 3 bis 7 Zehntel, vorzugsweise 4 bis 6 Zehntel und weiter vorzugsweise 5 Zehntel Millimeter größer als der Durchmesser des ersten Abschnitts.

Vorteilhafterweise sind bei einer Ausführung des erfindungsgemäßen Bremszylindergehäuses die Winkel zwischen der Längsachse der Bohrung und den Tangenten der Bohrung im zweiten Abschnitt kleiner als 30 Grad und vorzugsweise kleiner als 20 Grad und weiter vorzugsweise kleiner als 15 Grad. Das hat den Vorteil, daß nach dem Lösen der Bremse der Bremskolben beim Zurückziehen in den zweiten Abschnitt der Bohrung immer in einem relativ flachen Winkel auf die Wandung der Bohrung trifft und die Gefahr eines Verklemmens des Bremskolbens in der Bohrung verringert wird.

Eine besonders gute Führung des Bremskolbens läßt sich erreichen, wenn der Durchmesser des nutfernen Endes dem Durchmesser des ersten Abschnitts entspricht.

Vorteilhafterweise weist die Bohrung zwischen dem zweiten Abschnitt und dem geschlossenen Ende einen dritten Abschnitt auf, dessen Durchmesser dem Durchmesser des ersten Abschnitts im wesentlichen, insbesondere genau entspricht. Dadurch läßt sich insbesondere bei einem neuen Bremsbelag eine gute Führung des Bremskolbens erreichen. Der Durchmesser des dritten Abschnitts kann auch geringfügig größer als der Durchmesser des ersten Abschnitts sein, ohne die Führungseigenschaften entscheidend zu beeinträchtigen.

Vorteilhafterweise erstreckt sich der dritte Abschnitt von dem zweiten Abschnitt bis zu dem geschlossenen Ende.

Wenn das bremscheibenferne Ende des Bremskolbens verjüngt ausgebildet ist, um ein Verklemmen des Bremskolbens an der Nut bei einem abgenutzten Bremsbelag noch sicherer auszuschließen, kann der Bereich der Bohrung am geschlossenen Ende auch einen gegenüber dem größten Durchmesser des Bremskolbens verengten Abschnitt aufweisen, in den das bremsscheibenferne Ende des Bremskolbens paßt.

Gemäß einer vorteilhaften Ausführung macht die Länge des dritten Abschnitts etwa ein Drittel bis das Fünfache, vorzugsweise die Hälfte bis das Dreifache, weiter vorzugsweise zwei Drittel bis das Zweifache der Länge des zweiten Abschnitts aus und entspricht weiter vorzugsweise im wesentlichen der Länge des zweiten Abschnitts.

Erfindungsgemäß kann sich der zweite Abschnitt von der Nut bis zu dem geschlossenen Ende erstrecken.

Weiterhin kann der Durchmesser des zweiten Abschnitts von seinem nutseitigen Ende zu seinem nutfernen Ende hin proportional mit seinem Abstand vom nutseitigen Ende abnehmen. Dabei ist vorteilhafterweise der Winkel zwischen der Längsachse der Bohrung und der Oberfläche des zweiten Abschnitts kleiner als 30 und vorzugweise kleiner als 20 Grad, liegt weiter vorzugsweise in einem Bereich von ungefähr 5 bis 15 Grad und beträgt weiter vorzugsweise ungefähr 10 Grad.

In die konkrete Wahl des Winkels fließen folgende Erwägungen des Fachmanns ein: Je kleiner der Winkel gewählt wird, desto leichter läßt sich der Bremskolben ohne ein Verklemmen in den sich an die Nut anschließenden Abschnitt der Bohrung einführen. Andererseits ergibt sich bei einem größeren Winkel ein kürzerer zweiter Abschnitt. Das hat den Vorteil, daß bei zunehmenden Belagverschleiß eine optimale Führung in einem eventuell vorhandenen dritten Abschnitt länger als bei der Wahl eines kleineren Winkels gewährleistet ist.

Erfindungsgemäß kann der Durchmesser des zweiten Abschnitts im Bereich seines nutseitigen Endes in Richtung des nutfernen Endes auch schneller als in dem Bereich seines nutfernen Endes abnehmen.

Gemäß einer Ausführung der Erfindung kann der zweite Abschnitt eine Oberflächenkontur aufweisen, die durch einen Bogen beschreibbar ist, der vorzugsweise durch einen oder mehrere ineinander übergehende Kreisbögen gebildet ist, weiter vorzugsweise derart, daß sich die Oberfläche des zweiten Abschnitts in die Bohrung wölbt.

Bei einer Ausführung mit einem Kreisbogen beträgt dessen Radius vorzugsweise etwa 0,3 bis 0,7, vorzugsweise 0,4 bis 0,6 und weiter vorzugsweise 0,5 Millimeter. Bei dieser Ausführung der Erfindung hat der Kreisbogen weniger als 90 Grad, vorzugsweise zwischen 80 und 30 Grad, weiter vorzugsweise zwischen 75 und 45 Grad und insbesondere zwischen 70 und 60 Grad.

Bei einer Ausführung mit zwei ineinander übergehenden Kreisbögen weist vorzugsweise der Kreisbogen im Bereich des nutseitigen Endes einen kleineren Radius als der Kreisbogen im Bereich des nutfernen Endes auf, wodurch die Einführung des Bremskolbens in den zweiten Abschnitt verbessert wird. Dabei beträgt vorteilhafterweise der Radius des Kreisbogens im Bereich des nutseitigen Endes etwa 0,3 bis 0,7, vorzugsweise 0,4 bis 0,6 und weiter vorzugsweise 0,5 Millimeter, und der Radius des Kreisbogens im Bereich des nutfernen Endes beträgt vorteilhafterweise etwa 0,4 bis 1,2, vorzugsweise 0,6 bis 1,0, weiter vorzugsweise 0,7 bis 0,9 und weiter vorzugsweise 0,8 Millimeter.

Erfindungsgemäß ist der zweite Abschnitt am nutseitigen Ende vorzugsweise derart aufgeweitet, daß die durch die unterschiedliche Abnutzung des Bremsbelags verursachte Verkippung des Bremskolbens insbesondere bei stark abgenutztem Bremsbelag erfolgen kann, ohne daß der Bremskolben gegen die relativ steile Wandung der Nut trifft und sich dort beim Einrücken verklemmt.

Die Erfindung betrifft auch eine Scheibenbremse, insbesondere für Fahrräder, mit mindestens einem und vorzugsweise zwei erfindungsgemäßen Bremszylindern.

Im folgenden wird die Erfindung anhand der in den Figuren gezeigten Ausführungsbeispiele der Erfindung näher beschrieben:
- Fig. 1: zeigt eine Querschnittsansicht eines ersten Ausführungsbeispiels eines Bremszylindergehäuses gemäß der vorliegenden Erfindung im Zusammenhang mit weiteren Teilen einer Scheibenbremse.
- Fig. 2: zeigt eine Querschnittsteilansicht eines zweiten Ausführungsbeispiels eines Bremszylindergehäuses gemäß der vorliegenden Erfindung.
- Fig. 3: zeigt eine Querschnittsteilansicht eines dritten Ausführungsbeispiels eines Bremszylindergehäuses gemäß der vorliegenden Erfindung.
- Fig. 4: zeigt eine Querschnittsteilansicht eines vierten Ausführungsbeispiels eines Bremszylindergehäuses gemäß der vorliegenden Erfindung.
- Fig. 5: zeigt eine Querschnittsteilansicht eines fünften, derzeit bevorzugten Ausführungsbeispiels eines Bremszylindergehäuses gemäß der vorliegenden Erfindung.
- Fig. 6: zeigt eine Querschnittsansicht eines erfindungsgemäßen Bremssattels mit zwei Bremszylindergehäusen.

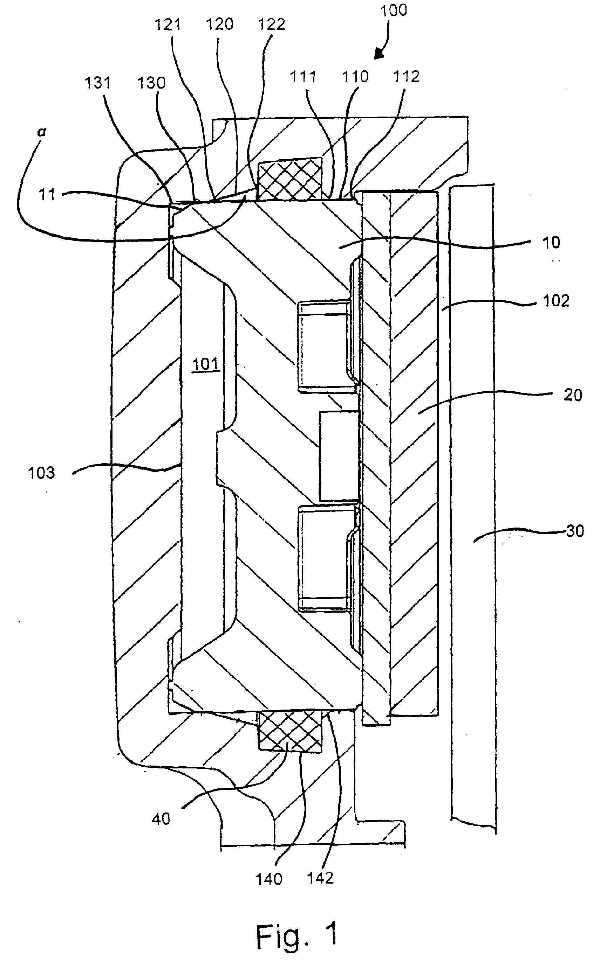

Fig. 1 zeigt ein Bremszylindergehäuse 100 gemäß der vorliegenden Erfindung. In dem Bremszylindergehäuse 100 ist eine Bohrung 101 vorgesehen in der ein Bremskolben 10 verschiebbar angeordnet ist. Auf bekannte Weise wird beim Bremsen in einem Druckraum Druck aufgebaut, der den Bremskolben 10 in Richtung der Bremsscheibe 30 verschiebt, um den an dem Bremskolben 10 befestigten Bremsbelag 20 mit der Bremsscheibe in Reibeingriff zu bringen. Auf der anderen Seite der Bremsscheibe ist ein weiterer nicht dargestellter Bremsbelag vorhanden, der beim Bremsen ebenfalls mit der Bremsscheibe in Reibeingriff gelangt. Der weitere Bremsbelag kann entweder beim Bremsvorgang nicht verschoben werden oder auf einem zu dem dargestellten Bremskolben spiegelbildlichen Bremskolben entsprechend montiert sein.

Das Bremszylindergehäuse kann in einem Schwimmsattel, einem Festsattel oder einem anderen bekannten Sattel für eine Scheibenbremse integriert sein.

Das Bremszylindergehäuse 100 weist eine Bohrung 101 auf, die sich von einem offenen Ende 102 zu einem geschlossenen Ende 103 erstreckt. Das offene Ende 102 ist der Bremsscheibe 30 zugewandt, während das geschlossene Ende 103 von der Bremsscheibe 30 abgewandt ist.

Der Bremskolben 10 wird in einem ersten Abschnitt 110 geführt. Der erste Abschnitt verläuft zylinderförmig von einem bremsscheibenseitigen Ende 112 zu einem bremsscheibenfernen Ende 111. Der Druchmesser des ersten Abschnitts 110 ist geringfügig größer als der Außendurchmesser des Bremskolbens 10, derart, daß der Bremskolben in bekannter Weise in dem ersten Abschnitt 110 geführt wird.

In Richtung des geschlossenen Endes 103 schließt sich an den ersten Abschnitt eine Nut 140 zur Aufnahme einer zwischen dem Bremskolben 10 und der Bohrung 101 wirkenden Dichtung 40 an. Die Dichtung 40 dichtet den Druckraum nach außen ab. Die Nut 140 hat einen im wesentlichen rechteckigen Querschnitt. Auf der dem ersten Abschnitt 110 zugewandten Seite weist die Nut 140 eine Phase 142 auf, die auf bekannte Weise der Dichtung gestattet, sich zur Spieleinstellung (Lüftspiel) mit dem Bremskolben beim Bremsen in Richtung der Bremsscheibe zu bewegen, um den Bremskolben nach dem Lösen der Bremse um ein bestimmtes Maß zurückzuholen.

Statt der dargestellten Nutform und Dichtungsform können auch andere bekannte Nutformen und Dichtungsformen vorgesehen werden, mit denen die Dichtungsfunktion und Spieleinstellung (Lüftspiel) verwirklicht werden können.

An die Nut 140 schließt sich in Richtung des geschlossenen Endes 103 der Bohrung 101 ein zweiter Abschnitt 120 an. Der zweite Abschnitt 120 verläuft von einem nutseitigen Ende 122 zu einem nutfernen Ende 121. Die Bohrung hat am nutseitigen Ende 122 einen Durchmesser, der größer als der Durchmesser des ersten Abschnitts 110 ist. Der Durchmesser am nutfernen Ende 121 entspricht dem Durchmesser des ersten Abschnitts 110. Der zweite Abschnitt 120 ist in Form eines Konus ausgebildet. Der Winkel α zwischen der Längsachse der Bohrung 101 und der Wandung der Bohrung 101 in dem zweiten Abschnitt 120 beträgt etwa 10 bis 15 Grad.

Durch die Aufweitung der Bohrung an dem nutseitigen Ende 122 des zweiten Abschnitts 120 im Anschluß an die Nut 140 kann ein Verklemmen des Bremskolbens 10 in der Nut 140 beim Bremsen mit einem abgenutzen Bremsbelag vermieden werden. Diese Wirkung unterstützt die an dem bremsscheibenfernen Ende des Bremskolbens 10 vorgesehene Abschrägung 11. Statt der Abschrägung kann der Bremskolben dort auch mit einer Rundung versehen werden, um den zusätzlichen Vorteil zu erreichen.

An den zweiten Abschnitt 120 schließt sich in Richtung des geschlossenen Endes 103 ein dritter Abschnitt 130 an. Der dritte Abschnitt verläuft zwischen dem nutfernen Ende 121 des zweiten Abschnitts 120 und dem Ende 131. Das Ende 131 ist gemäß Fig. 1 als rechter Winkel ausgebildet. Das Ende 131 kann auch eine der Form des Bremskolbens 10 entsprechende Form aufweisen. Beispielsweise könnte das Ende 131 einen der Abschrägung 11 entsprechenden Konus aufweisen. Der dritte Abschnitt 130 hat einen Durchmesser, der dem Durchmesser des ersten Abschnitts 110 entspricht. Das hat den Vorteil, daß insbesondere bei einem neuen Bremsbelag eine optimale Führung des Bremskolbens 10 sowohl durch den ersten Abschnitt 110 als auch durch den dritten Abschnitt 130 gewährleistet ist. Erst bei abgenutzten Bremsbelägen nimmt die Führungswirkung mit zunehmender Abnutzung langsam ab, wenn sich der Bremskolben beim Bremsen zunehmend weiter in Richtung der Bremsscheibe an dem zweiten Abschnitt abstützt.

Das Länge des ersten Abschnitts 120 entspricht etwa der Länge des dritten Abschnitts 130.

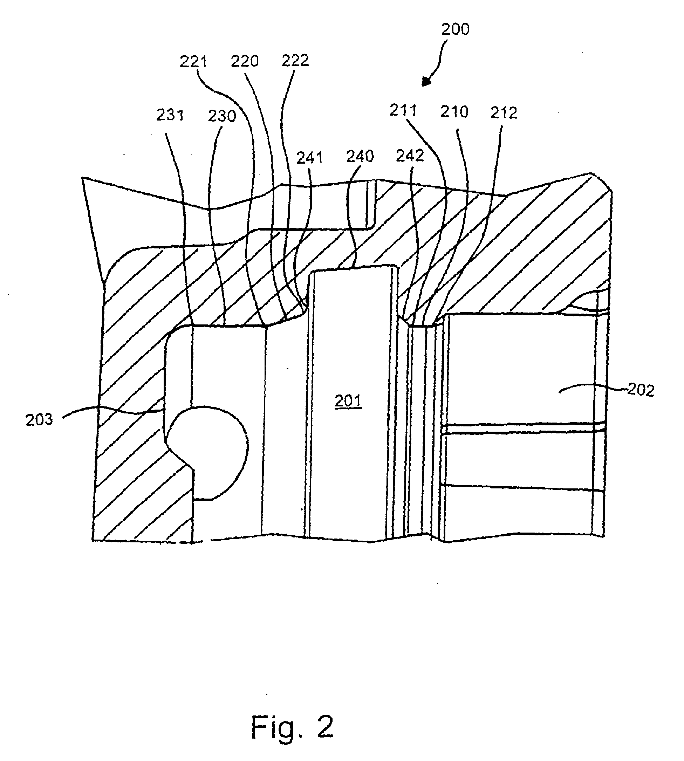

Die Figuren 2 bis 5 zeigen alternative Ausführungen der Ausgestaltung der Bohrung 201, 301, 401 bzw. 501 des Bremszylindergehäuses 200, 300, 400 bzw. 500. Übersichthalber sind Teile der Scheibenbremse, d.h. insbesondere der Bremskolben 10, der Bremsbelag 20, die Bremsscheibe 30 und die Dichtung 40 in den Figuren 2 bis 5 nicht dargestellt. Außerdem wird jeweils nur eine Teilansicht des Bremszylindergehäuses 200, 300, 400 bzw. 500 gezeigt, die den in Fig. 1 oberen Bereich der Bohrung 201, 301, 401 bzw. 501 darstellt. Der in Fig. 1 untere Bereich der Bohrung 201, 301, 401 bzw. 501 ist entsprechend dem in den Figuren 2 bis 5 dargestellten oberen Bereich aufgebaut.

Die den der Fig. 1 gezeigten Teilen entsprechenden Teile werden in den Figuren 2 bis 5 mit Bezugszeichen bezeichnet, die im Vergleich zu Fig. 1 um 100, 200, 300 bzw. 400 erhöht sind.

Fig. 2 zeigt eine Querschnittteilansicht eines zweiten Ausführungsbeispiels eines Bremszylindergehäuses 200 gemäß der vorliegenden Erfindung.

Das Bremszylindergehäuse 200 unterscheidet sich von dem in Fig. 1 gezeigten Bremszylindergehäuse 100 im wesentlichen durch folgende Merkmale:
1. Die Länge des zweiten Abschnitts 220 beträgt etwa die Hälfte der Länge des dritten Abschnitts 230.
2. Der Übergang zwischen der Nut 240 und dem zweiten Abschnitt 220 ist zwischen dem Ende 241 der Nut und dem nutseitigen Ende 222 abgerundet, um eine scharfe Kante zu vermeiden. Ebenfalls weist der Abschluß der Bohrung 201 bei dem geschlossen Ende 203, d.h. zwischen dem bremsscheibenfernen Ende 231 des dritten Abschnitts und dem geschlossenen Ende 203 eine Rundung auf, die vorzugsweise der Form des bremsscheibenfernen Endes des Bremskolbens entspricht.

Bezüglich der übrigen Teile wird auf die Ausführungen zu dem in Fig. 1 dargestellten Ausführungsbeispiel und auf dem Fachmann bekannte Scheibenbremsen insbesondere für Fahrräder verwiesen.

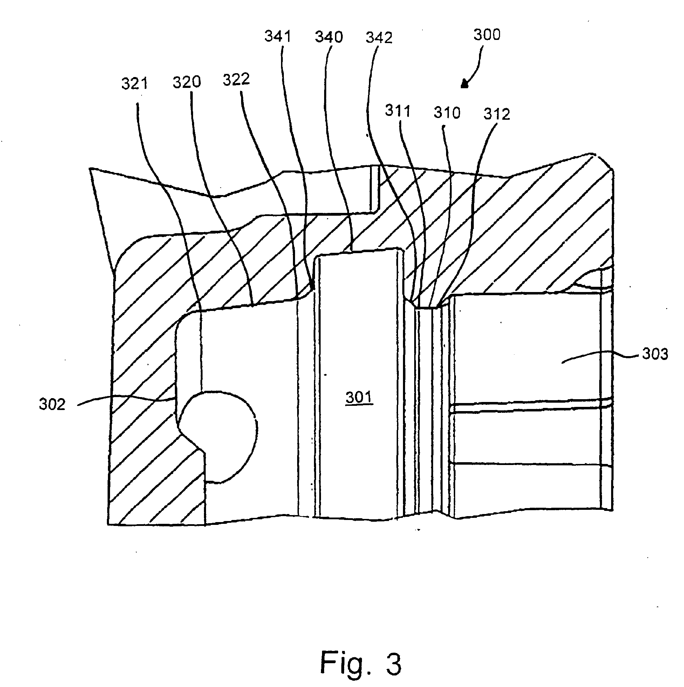

Fig. 3 zeigt eine Querschnittteilansicht eines dritten Ausführungsbeispiels eines Bremszylindergehäuses 300 gemäß der vorliegenden Erfindung.

Das Bremszylindergehäuse 300 unterscheidet sich von den in den Figuren 1 und 2 gezeigten Bremszylindergehäusen 100 bzw. 200 im wesentlichen durch folgende Merkmale:
1. Statt einen dritten Abschnitt vorzusehen, erstreckt sich der zweite Abschnitt 320 im wesentlichen von der Nut 340 bis zu dem geschlossenen Ende 303 der Bohrung 301.
2. Zwischen dem Ende 341 der Nut 340 und dem nutseitigen Ende 322 des konischen zweiten Abschnitts 320 ist ein runder Übergangsbereich vorgesehen, der einen etwas größeren Radius als der entsprechende runde Übergang von dem in Fig. 2 gezeigten Bremszylindergehäuse aufweist. Der runde Übergangsbereich hat den Vorteil, daß ein kleinerer Winkel für den konischen zweiten Abschnitt gewählt werden kann, so daß eine bessere Führung des Bremskolbens in dem zweiten Abschnitt erreichbar ist.

Bezüglich der übrigen Teile wird auf die Ausführungen zu den in den Figuren 1 und 2 dargestellten Ausführungsbeispielen und auf dem Fachmann bekannte Scheibenbremsen insbesondere für Fahrräder verwiesen.

Gemäß einer nicht dargestellten Ausführung schließt sich ein konischer zweiter Abschnitt mit seinem nutseitigen Ende unmittelbar an die Nut an, d.h. daß beispielsweise bei der in Fig. 3 dargestellten Ausführung der runde Übergang zwischen der Nut 340 und dem zweiten Abschnitt 320 weggelassen wird.

Stattdessen kann, falls gewünscht, der Winkel zwischen der Längsachse der Bohrung 301 und der Wandung der Bohrung 301 in dem zweiten Abschnitt 320 größer gewählt werden.

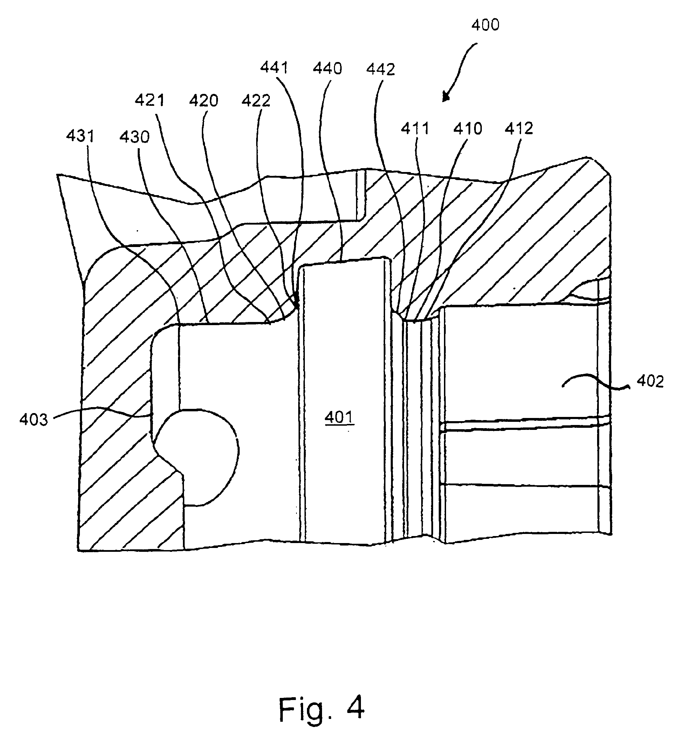

Fig. 4 zeigt eine Querschnittteilansicht eines vierten Ausführungsbeispiels eines Bremszylindergehäuses 400 gemäß der vorliegenden Erfindung.

Das Bremszylindergehäuse 400 unterscheidet sich von den in den Figuren 1 bis 3 gezeigten Bremszylindergehäusen 100, 200 bzw. 300 im wesentlichen durch folgende Merkmale:
1. Der dritte Abschnitt 430 ist wesentlich länger als in den anderen gezeigten Bremszylindergehäusen 100 bzw. 200.
2. Zwischen dem Ende 441 der Nut 440 und dem dritten Abschnitt 430 ist der zweite Abschnitt 420 als ein runder Übergangsbereich ausgebildet. Der zweite Abschnitt 420 ist durch zwei ineinander übergehende Kreisbögen beschreibbar, wobei der erste Kreisbogen im Bereich des nutfernen Endes 421 einen Radius von 0,8 Millimetern und sich daran anschließende Kreisbogen im Bereich des nutseitigen Endes 422 einen Radius von 0,5 Millimetern aufweist.

Der runde Übergangsbereich hat den Vorteil, daß der dritte zylindrische Abschnitt sehr lang ausgebildet werden kann, so daß eine sehr gute Führung des Bremskolbens in dem dritten Abschnitt erreichbar ist.

Der zweite Abschnitt 420 kann auch anders als in Fig. 4 gezeigt ausgebildet werden. Beispielsweise kann der zweite Abschnitt 420 durch eine Kreisbogen von weniger als 90 Grad, beispielsweise 45 Grad, 30 Grad oder 20 Grad Kreisbogenlänge gebildet werden. Vorzugsweise ist dabei der Übergang des zweiten Abschnitts 420 an dem nutfernen Ende 421 fließend bzw. glatt, während an dem nutseitigen Ende 422 eine Kante vorgesehen sein kann.

Bezüglich der übrigen Teile wird auf die Ausführungen zu den in den Figuren 1 bis 3 dargestellten Ausführungsbeispielen und auf dem Fachmann bekannte Scheibenbremsen insbesondere für Fahrräder verwiesen.

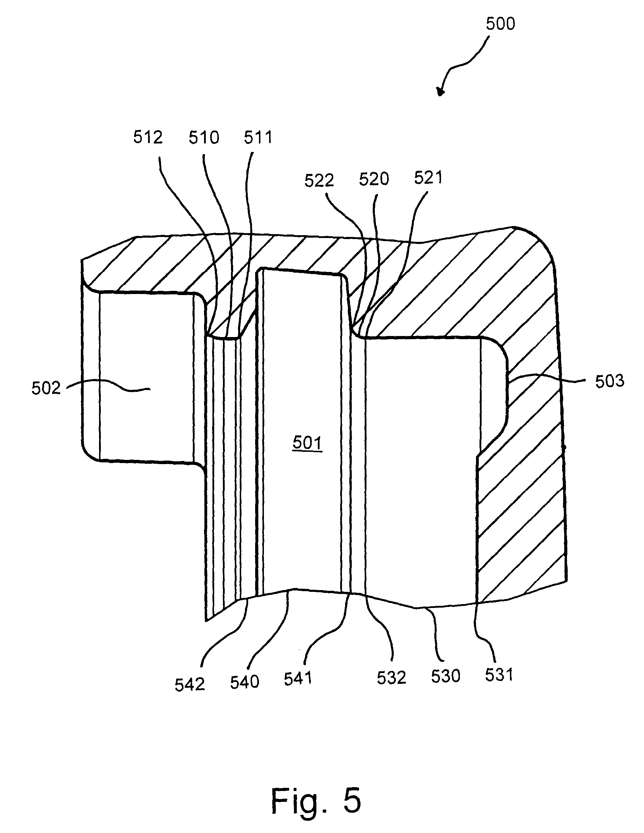

Fig. 5 zeigt eine Querschnittteilansicht eines fünften Ausführungsbeispiels eines Bremszylindergehäuses 500 gemäß der vorliegenden Erfindung, das derzeit von dem Erfinder als das bevorzugte Ausführungsbeispiel angesehen wird.

Das Bremszylindergehäuse 500 entspricht im wesentlichen dem in Fig. 4 gezeigten Bremszylindergehäuse 400 und unterscheidet sich von dem in Fig. 4 gezeigten Bremszylindergehäuse 400 im wesentlichen durch folgende Merkmale:
1. Die Darstellung von Fig. 5 ist spielgelbildlich zu der Darstellung von Fig. 4.
2. Der dritte Abschnitt 530 ist länger als der dritte Abschnitt 430 des in Fig. 4 gezeigten Bremszylindergehäuses 400 ausgebildet.
3. Der zweite Abschnitt 520 ist als runder Übergangsbereich ausgebildet und durch einen Kreisbogen von weniger als 90 Grad beschreibbar, der einen Radius von 0,5 Millimetern aufweist.
4. Die dem zweiten Abschnitt 520 zugewandte Seitenwand der Nut verläuft in einem Winkel von ca. 85 Grad zu der Längsachse der Bohrung, d.h. daß die Nut an ihrem offenen Ende etwas breiter ausgebildet ist.

Der zweite Abschnitt 520 kann auch anders als in Fig. 5 gezeigt ausgebildet werden. Beispielsweise kann der zweite Abschnitt 520 durch eine Kreisbogen von 90 Grad oder einem Kreisbogen von weniger 90 Grad, beispielsweise 45 Grad oder 30 Grad ausgebildet sein. Je kleiner der Kreisbogen ist, desto größer sollte der Radius gewählt sein, um zu gewährleisten, daß der zweite Abschnitt den verkippten Bremskolben aufnehmen kann.

Bei einem relativ langen Kreisbogen von beispielsweise 45 bis 90 Grad sollte der Radius des Kreisbogens relativ groß gewählt werden. Er sollte derart groß gewählt sein, daß der verkippte Bremskolben beim Zurückziehen auf die Wandung der Bohrung in einem relativ flachen Winkel von höchstens 45 Grad und vorzugsweise weniger als 30 Grad trifft.

Vorzugsweise ist der Übergang des zweiten Abschnitts 520 in den dritten Abschnitt 530 an dem nutfernen Ende 521 fließend bzw. glatt, während an dem nutseitigen Ende 522 eine Kante vorgesehen sein kann.

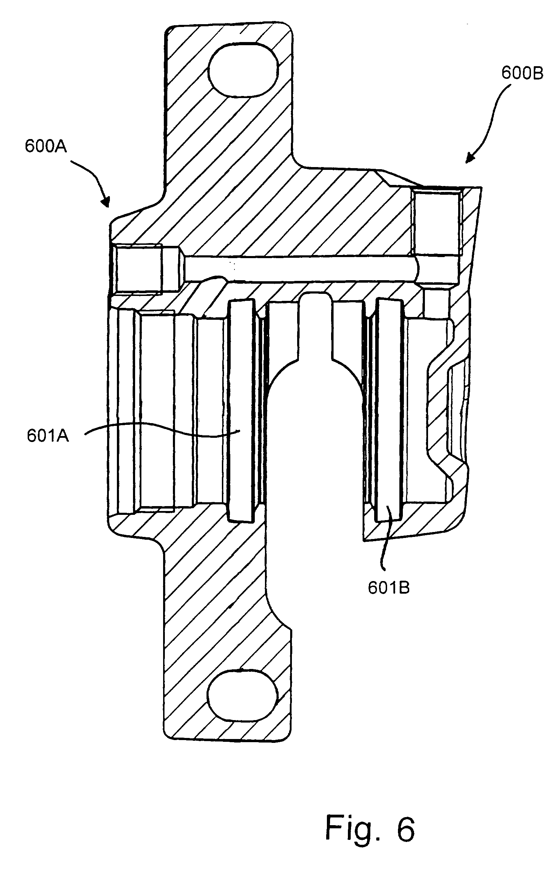

Fig. 6 zeigt eine Querschnittsansicht eines erfindungsgemäßen Bremssattels, in dem zwei Bremszylindergehäuse 600A, 600B ausbgebildet sind, die jeweils eine Bohrung 601A bzw. 601B mit einer Geometrie aufweisen, die der Bohrung 501 des Bremszylindergehäuses von 500 Fig. 5 entspricht. Die Geometrien der Bohrungen 601A und 601B sind dabei bis auf das bremsscheibenferne Ende zueinander spiegelverkehrt ausgebildet.

Die Erfindung betrifft somit auch ein Bremszylindergehäuse für eine Scheibenbremse mit mindestens einer Bohrung zur Aufnahme eines Bremskolbens, die ein offenes Ende, ein geschlossenes Ende, einen ersten Abschnitt zur Führung des Bremskolbens, eine sich in Richtung des geschlossenen Endes vorzugsweise unmittelbar daran anschließende Nut zur Aufnahme einer zwischen Bremskolben und Bohrung wirkenden Dichtung und einen sich in Richtung des geschlossenen Endes vorzugsweise unmittelbar daran anschließenden zweiten Abschnitt aufweist, der gegenüber dem ersten Abschnitt an seinem nutseitigen Ende derart aufgeweitet ist, daß er einen verkippten Bremskolben in den zweiten Abschnitt ohne die Gefahr des Verklemmens in der Nut einführen kann, und der sich in Richtung des geschlossenen Endes derart verengt, daß er den Bremskolben führen kann.

## Patentansprüche

1. Bremszylindergehäuse (100; 200; 300; 400; 500) für eine Scheibenbremse mit
mindestens einer Bohrung (101; 201; 301; 401; 501) zur Aufnahme eines Bremskolbens (10), die ein bremsscheibenseitiges offenes Ende (102; 202; 302; 402; 502) und ein bremsscheibenfernes geschlossenes Ende (103; 203; 303; 403; 503) aufweist,
einer in der Bohrung (101; 201; 301; 401; 501) ausgebildeten Nut (140; 240; 340; 440; 540) zur Aufnahme einer zwischen Bremskolben und Bohrung wirkenden Dichtung,
einem zwischen der Nut und dem offenen Ende (102; 202; 302; 402; 502) liegenden ersten Abschnitt (110; 210; 310; 410; 510) der Bohrung zur Führung des Bremskolbens in der Bohrung, und
einem sich an die Nut anschließenden zweiten Abschnitt (120; 220; 320; 420; 520) der Bohrung, der zwischen der Nut und dem geschlossenen Ende (103; 203; 303; 403; 503) liegt und ein nutseitiges Ende (122; 222; 322; 422; 522) und ein nutfernes Ende (121; 221; 321; 421; 521) aufweist,
wobei der zweite Abschnitt (120; 220; 320; 420; 520) am nutseitigen Ende (122; 222; 322; 422; 522) einen Durchmesser hat, der größer als der Durchmesser des ersten Abschnitts (110; 210; 310; 410; 510) ist,
**dadurch gekennzeichnet, daß** der Durchmesser des zweiten Abschnitts (120; 220; 320; 420; 520) vom nutseitigen Ende (122; 222; 322; 422; 522) zum nutfernen Ende (121; 221; 321; 421; 521) hin abnimmt.

2. Bremszylindergehäuse (100; 200; 300; 400; 500) nach Anspruch 1, **dadurch gekennzeichnet, daß** der Durchmesser des zweiten Abschnitts (120; 220; 320; 420; 520) am nutseitigen Ende (122; 222; 322; 422; 522) hinreichend groß ist, um einen im ersten Abschnitt (110; 210; 310; 410; 510) geführten und infolge der Bremsbelagabnutzung gegenüber der Bohrung verkippten Bremskolben aufzunehmen, und der Durchmesser des zweiten Abschnitts (120; 220; 320; 420; 520) am nutfernen Ende (121; 221; 321; 421; 521) im wesentlichen dem Durchmesser des ersten Abschnitts (110; 210; 310; 410; 510) entspricht.

3. Bremszylindergehäuse (100; 200; 300; 400; 500) nach einem der vorhergehenden Ansprüche, **dadurch gekennzeichnet, daß** der Durchmesser des zweiten Abschnitts (120; 220; 320; 420; 520) am nutseitigen Ende (122; 222; 322; 422; 522) 3 bis 7 Zehntel, vorzugsweise 4 bis 6 Zehntel und weiter vorzugsweise 5 Zehntel größer als der Durchmesser des ersten Abschnitts (110; 210; 310; 410; 510) ist, und der Durchmesser des zweiten Abschnitt (120; 220; 320; 420; 520) am nutfernen Ende (121; 221; 321; 421; 521) im wesentlichen dem Durchmesser des ersten Abschnitts (110; 210; 310; 410; 510) entspricht.

4. Bremszylindergehäuse (100; 200; 300; 400; 500) nach einem der vorhergehenden Ansprüche, **dadurch gekennzeichnet, daß** die Winkel zwischen der Längsachse der Bohrung und den Tangenten der Bohrung im zweiten Abschnitt (120; 220; 320; 420; 520) kleiner als 30 Grad und vorzugweise kleiner als 20 Grad und weiter vorzugsweise kleiner als 15 Grad sind.

5. Bremszylindergehäuse (100; 200; 300; 400; 500) nach einem der vorhergehenden Ansprüche, **dadurch gekennzeichnet, daß** der Durchmesser des nutfernen Endes (121; 221; 321; 421; 521) des zweiten Abschnitts (120; 220; 320; 420; 520) dem Durchmesser des ersten Abschnitts (110; 210; 310; 410; 510) im wesentlichen und insbesondere genau entspricht.

6. Bremszylindergehäuse (100; 200; 400; 500) nach einem der vorhergehenden Ansprüche, **dadurch gekennzeichnet, daß** die Bohrung zwischen dem zweiten Abschnitt (120; 220; 420; 520) und dem geschlossenen Ende (103; 203; 403; 503) einen dritten Abschnitt (130; 230; 430; 530) aufweist, dessen Durchmesser dem Durchmesser des ersten Abschnitts (110; 210; 410; 510) im wesentlichen entspricht, vorzugsweise diesem Durchmesser genau entspricht oder geringfügig größer als dieser Durchmesser ist.

7. Bremszylindergehäuse (100; 200; 400; 500) nach Anspruch 6, **dadurch gekennzeichnet, daß** sich der dritte Abschnitt (130; 230; 430; 530) von dem zweiten Abschnitt (120; 220; 420; 530) bis zu dem geschlossenen Ende (103; 203; 403; 503) erstreckt.

8. Bremszylindergehäuse (100; 200; 400) nach Anspruch 6 oder 7, **dadurch gekennzeichnet, daß** die Länge des dritten Abschnitts (130; 230; 430; 530) etwa ein Drittel bis das Fünfache, vorzugsweise die Hälfte bis das Dreifache, weiter vorzugsweise zwei Drittel bis das Zweifache der Länge des zweiten Abschnitts (120; 220; 420; 520) ausmacht und weiter vorzugsweise der Länge des zweiten Abschnitts (120; 220; 420; 520) im wesentlichen entspricht.

9. Bremszylindergehäuse (300) nach einem der Ansprüche 1 bis 5, **dadurch gekennzeichnet, daß** sich der zweite Abschnitt (320) von der Nut (340) bis zu dem geschlossenen Ende (303) erstreckt.

10. Bremszylindergehäuse (100; 200; 300) nach einem der vorhergehenden Ansprüche, **dadurch gekennzeichnet, daß** der Durchmesser des zweiten Abschnitts (120; 220; 320) von seinem nutseitigen Ende (122; 222; 322) zu seinem nutfernen Ende (121; 221; 321) hin proportional mit seinem Abstand vom nutseitigen Ende abnimmt.

11. Bremszylindergehäuse (100; 200; 300) nach Anspruch 10, **dadurch gekennzeichnet, daß** der Winkel (α) zwischen der Längsachse der Bohrung und der Oberfläche des zweiten Abschnitts (120; 220; 320) kleiner als 30 und vorzugweise kleiner als 20 Grad ist, weiter vorzugsweise in dem Bereich von ungefähr 5 bis 15 Grad liegt und weiter vorzugsweise ungefähr 10 Grad beträgt.

12. Bremszylindergehäuse (400) nach einem der vorhergehenden Ansprüche, **dadurch gekennzeichnet, daß** der Durchmesser des zweiten Abschnitts (420) im Bereich seines nutseitigen Endes (422) in Richtung des nutfernen Endes (421) stärker bzw. schneller als in dem Bereich seines nutfernen Endes abnimmt.

13. Bremszylindergehäuse (400; 500) nach einem der vorhergehenden Ansprüche, **dadurch gekennzeichnet, daß** der zweite Abschnitt (420; 520) eine Oberflächenkontur aufweist, die durch einen Bogen beschreibbar ist, der vorzugsweise durch einen oder mehrere ineinander übergehende Kreisbögen gebildet ist.

14. Bremszylindergehäuse (500) nach Anspruch 13, **dadurch gekennzeichnet, daß** der Bogen durch einen Kreisbogen gebildet ist, dessen Radius vorzugsweise etwa 0,3 bis 0,7, vorzugsweise 0,4 bis 0,6 und weiter vorzugsweise 0,5 Millimeter beträgt.

15. Bremszylindergehäuse (400) nach Anspruch 13, **dadurch gekennzeichnet, daß** der Bogen durch zwei ineinander übergehende Kreisbögen gebildet ist, wobei der Kreisbogen im Bereich des nutseitigen Endes (422) einen kleineren Radius als der Kreisbogen im Bereich des nutfernen Endes (421) aufweist.

16. Bremszylindergehäuse (400) nach Anspruch 15, **dadurch gekennzeichnet, daß** der Radius des Kreisbogens im Bereich des nutseitigen Endes (422) etwa 0,3 bis 0,7, vorzugsweise 0,4 bis 0,6 und weiter vorzugsweise 0,5 Millimeter beträgt.

17. Bremszylindergehäuse (400) nach Anspruch 15 oder Anspruch 16, **dadurch gekennzeichnet, daß** der Radius des Kreisbogens im Bereich des nutfernen Endes (421) etwa 0,4 bis 1,2, vorzugsweise 0,6 bis 1,0, weiter vorzugsweise 0,7 bis 0,9 und weiter vorzugsweise 0,8 Millimeter beträgt.

18. Bremszylindergehäuse (100; 200; 300; 400; 500) nach einem der vorhergehenden Ansprüche, **dadurch gekennzeichnet, daß** der Durchmesser der Bohrung am nutseitigen Ende (122; 222; 322; 422; 522) etwa 3 bis 7 Zehntel, vorzugsweise 4 bis 6 Zehntel und weiter vorzugsweise 5 Zehntel Millimeter größer als der Durchmesser des ersten Abschnitts (110; 210; 310; 410; 510) ist.

19. Scheibenbremse, insbesondere für Fahrräder, mit mindestens einem und vorzugsweise zwei Bremszylindern (100; 200; 300; 400; 500; 600A, 600B) nach einem der vorhergehenden Ansprüche.
